# FASCICULE DE BREVET EUROPEEN

(11) **EP 0 668 826 B1**
(45) Date de publication et mention de la délivrance du brevet: **30.08.2000**
(21) Numéro de dépôt: 93923997.6
(22) Date de dépôt: 27.10.1993
(51) Int. Cl.: B60L 11/12

(54) **SYSTEME DE TRACTION POUR VEHICULE ET METHODE DE CONTROLE DU SYSTEME DE TRACTION**
FAHRZEUGANTRIEBSSYSTEM UND ANTRIEBSSYSTEM-STEUERUNGSVERFAHREN
VEHICLE DRIVE SYSTEM AND METHOD FOR MONITORING SAME

(30) Priorité: 16.11.1992 US 975331
(43) Date de publication de la demande: 30.08.1995
(73) Titulaire: HYDRO-QUEBEC, Montréal Québec H2Z 1A4 (CA)
(72) Inventeur: COUTURE, Pierre, Boucherville, Québec J4B 4A4 (CA); FRANCOEUR, Bruno, Loretteville, Québec G2A 2S4 (CA)
(74) Mandataire: Thébault, Jean-Louis
(86) Numéro de dépôt international: CA9300459
(87) Numéro de publication internationale: WO9411215

(56) Documents cités:
- EP-A- 0 073 861
- EP-A- 0 460 850
- WO-A-86/06009
- DE-A- 3 041 922
- FR-A- 2 592 342
- GB-A- 1 407 951
- GB-A- 2 170 664
- GB-A- 2 252 689
- US-A- 4 199 037
- US-A- 4 495 451
- PROCEEDINGS OF THE 24TH INTERSOCIETY ENERGING CONVERSION ENGINEERING CONFERENCE 6 Aoüt 1989 , WASHINGTON pages 737 - 741 XP000078823 W.B.LAWRENCE ET AL. 'Microprocessor control of a hybrid energy system'

## Description

La présente invention concerne un système de traction pour un véhicule muni, d'un système de démarrage, d'un accélérateur, d'un système de changement de vitesse et d'une batterie; et une méthode de contrôle du système de traction.

Dans la demande de brevet européen publiée sous le numéro 0,073,861, on décrit un système de traction hybride pour alimenter électriquement le moteur d'un véhicule dans un premier temps uniquement à partir d'une batterie, et, lorsque la batterie devient trop faible, dans un deuxième temps, uniquement à partir d'une génératrice auxiliaire entraînée par un moteur à combustion.

On trouve dans l'art antérieur le brevet américain no.4,211,930, délivré le 8 juillet 1980 à Werner H. FENGLER. Ce brevet décrit un alternateur entraîné par un moteur ainsi qu'un système de propulsion avec moteurs-roue électriques commandés séparément pour un véhicule à quatre roues muni d'un volant de direction. Ce système comprend un alternateur deux-phases entraîné par un moteur, une pluralité de moteurs pas-à-pas respectivement reliés aux roues, une batterie, un système de puissance électrique contrôlé par impulsions comprenant une pluralité de redresseurs contrôlés par gâchettes ayant des moyens d'entrée de courant électrique et des moyens de sortie de courant électrique, et un circuit de contrôle de moteur pas-à-pas branché entre la sortie de l'alternateur et les entrées de moteur et incluant des moyens de commutation branchés aux gâchettes desdits redresseurs et réagissant à la réception d'impulsions positives ou négatives pour activer sélectivement les premiers et seconds enroulements des pièces polaires du stator, séparément ou simultanément, de façon à effectuer une rotation pas-a-pas des rotors. Tel que montré, l'alternateur deux-phases entrainé par un moteur fournit la majeure partie de l'énergie pour alimenter les moteurs pas-à-pas. La batterie est utilisée seulement lorsque de l'énergie additionnelle est requise. L'inconvénient avec ce système est que la majeure partie de l'énergie est produite par l'alternateur ce qui implique une consommation de carburant.

On trouve aussi dans l'art antérieur le brevet américain no. 4,951,769 délivré le 28 août 1990 à Hideo KAWAMURA. Le système de traction pour véhicule décrit dans ce brevet utilise une batterie seulement pour alimenter des accessoires du véhicule.

On trouve aussi dans l'art antérieur le brevet américain no. 4,928,227 délivré le 22 mai 1990 à Joseph C. BURBA et ai, dans lequel est décrit une méthode pour contrôler un dispositif de propulsion où le véhicule est alimenté soit par batterie soit par une génératrice à essence.

On trouve aussi dans l'art antérieur le brevet américain no. 3,792,742, délivré le 19 février 1974 à Charles J. MAGER, dans lequel est décrit un véhicule motorisé électrique alimenté essentiellement par des batteries.

On trouve aussi dans l'art antérieur le brevet américain no. 3,421,596, délivré le 14 janvier 1959 à H. W. CHRISTENSON et ai. Ce brevet décrit une transmission pour véhicule où chaque roue du véhicule est entraînée par un moteur électrique. Le véhicule a un moteur à combustion interne qui agit en tant que moteur primaire.

On trouve aussi dans l'art antérieur le brevet américain no. 4,495,451, délivré le 22 janvier 1985 à Maxwell K. BARNARD. Ce brevet décrit un système de transfert interne d'énergie pour transférer l'énergie entre les roues motrices et les roues à action de volant. Ce système est essentiellement entraîné par un moteur à combustion interne.

On trouve aussi dans l'art antérieur le brevet américain no. 4,913,258, délivré le 3 avril 1990 à Hiroshi SAKURAI. Ce brevet décrit un véhicule électrique qui est essentiellement alimenté par de l'énergie électrique.

On trouve aussi dans l'art antérieur la demande de brevet français publiée sous le no. 2,592,342 et déposé au nom de Michel GRAND. Ce brevet décrit un véhicule à traction électrique. Le véhicule est équipé de moteurs électriques pour entrainer séparément chacune de ses roues. Chaque moteur est muni d'un dispositif d'asservissement électronique. Un processeur central contrôle et commande toutes les fonctions du véhicule.

Aucun des brevets décrits ci-dessus ne propose un système de traction pour véhicule comprenant une batterie de puissance et une génératrice entraînée par un moteur à combustion où l'énergie qui sert à entraîner le véhicule est principalement fournie par la batterie ce puissance pour maintenir la consommation d'essence a un minimum et qui permet, sous certaines conditions, d'entraîner le véhicule simultanément à partir des énergies de la batterie et de la génératrice entraînée par un moteur à combustion.

Un objectif de la présente invention est de proposer un système de traction pour véhicule où un bus d'alimentation de puissance est principalement alimenté par une batterie, et où une génératrice entraînée par un moteur à combustion fournit l'énergie auxiliaire simultanément avec la batterie lorsque des conditions prédéterminées sont rencontrées.

Un autre objectif de la présente invention est de proposer un système de traction alimenté principalement par une batterie qui est plus petite que celles utilisées dans l'art antérieur.

La présente invention vise un système de traction tel que défini par la revendication 1.

La présente invention vise aussi une méthode de contrôle d'un système de traction telle que défini par la revendication 12.

Les objets, avantages et autre caractéristiques de la présente invention apparaîtront plus clairement à la lecture de la description qui suit, de réalisations préférentielles, en faisant référence aux dessins annexés.
La figure 1 est un diagramme bloc schématique illustrant un système de traction selon la présente invention; et
la figure 2 est un diagramme bloc schématique illustrant le mode de réalisation de la figure 1 avec plus de détails.

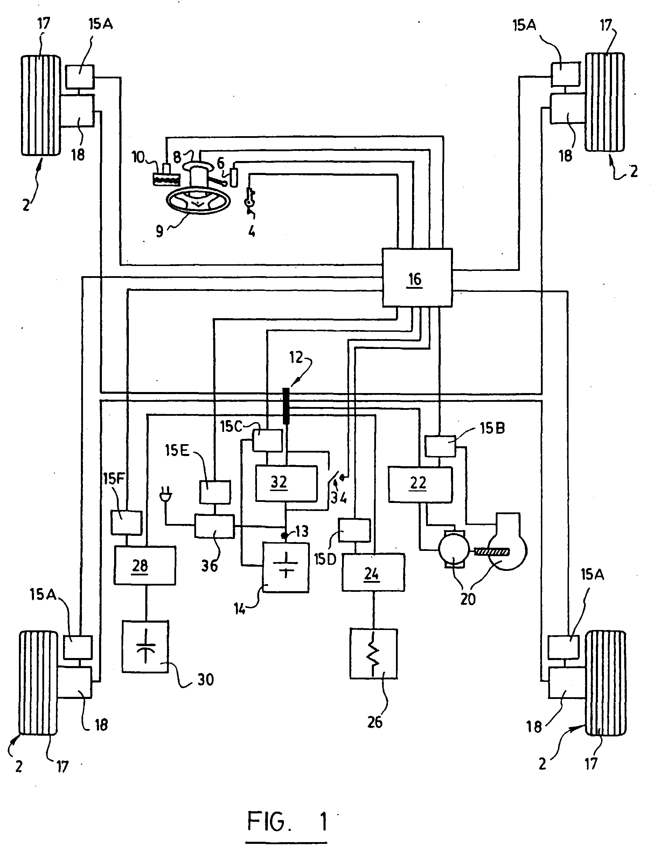

Si on se réfère maintenant à la figure 1, on montre un système de traction pour un véhicule muni d'un système-moteur 2 alimenté par de la puissance électrique, d'un système de démarrage gui est an démarreur à clé 4, d'an accélérateur à pédale 6, d'un sélecteur de mode d'opération du véhicule 8, d'un système de freinage à pédale 10 et d'une batterie de puissance 14. Le système de traction comprend un bus d'alimentation de puissance 12 ayant une sortie pour alimenter le système-moteur 2; un connecteur de batterie 13 pour effectuer un branchement à la batterie 14, le connecteur 13 ayant une sortie de puissance pour alimenter le bus d'alimentation de puissance 12; un système de contrôle 15A, 15B, 15C, 15D, 15E, 15F et 16 ayant des entrées branchées respectivement à la batterie 14, au démarreur à clé 4, à l'accélérateur à pédale 6, au sélecteur de mode d'opération du véhicule 8, au système de freinage à pédale 10 et au système-moteur 2 pour que, en opération, le système de contôle 15A, 15B, 15C, 15D, 15E, 15F et 15 supervise et commande leur état, le système de contrôle étant constitué d'un contrôleur primaire 16 et de contrôleurs auxiliaires 15A, 15B, 15C, 15D, 15E et 15F mais il peut également être constitué d'un seul contrôleur; et un système de conversion de puissance 18 ayant une première entrée branchée au bus d'alimentation de puissance 12, une seconde entrée branchée à la sortie du contrôleur 15A par lequel une opération du système de conversion de puissance peut être contrôlée et commande, et une sortie branchée au système-moteur 2 pour alimenter le système-moteur 2. Dans le cas présent, le système-moteur 2 est constitué de quatre moteurs-roues 17, cependant le système-moteur peut être constitué d'au moins déuse moteurs pour actionner les roues.

Le sélecteur de mode d'opération du véhicule 8 est un bras de vitesse monté sur une colonne de direction par lequel le conducteur peut embrayer le sélecteur de mode d'opération du véhicule pour faire fonctionner le véhicule en mode stationnement, en marche arrière, au neutre ou en marche avant. Dans le cas présent le bus d'alimentation de puissance 12 est préférablement un bus 500 volts en courant continu.

Le système de traction comprend aussi une génératrice 20 entraînée par un moteur à combustion ayant une entrée branchée au contrôleur 15B par lequel, en opération, la génératrice est contrôlée et commandée et une sortie pour générer un courant alternatif. De plus, un premier convertisseur de puissance 22 est prévu, avec une entrée branchée à la sortie de la génératrice 20 et une sortie pour alimenter le bus d'alimentation de puissance 12. Le contrôleur 15B est branché au premier convertisseur de puissance 22 de façon que, en opération, il soit supervisé et commandé par le contrôleur 15B. Avec le présent système de traction, le système de contrôle 15A, 15B, 15C, 15D, 15E, 15F et 16 supervise et commande la fonctionnement du système-moteur 2, et lorsqu'une puissance électrique auxiliaire est nécessaire sur ledit bus d'alimentation de puissance, le système de contrôle actionne la génératrice 20.

Normalement, seulement la batterie de puissance 14 fournit l'énergie au bus d'alimentation de puissance 12, la génératrice étant normalement non utilisée. Par conséquent, le contrôleur 15B est muni de moyens nécessaires pour activer ou désactiver la génératrice 20.

Le véhicule comprend quatre roues. Le système-moteur 2 comprend quatre moteurs-roues électriques commandés séparément 17 qui constituent respectivement les quatre roues du véhicule. Le système de conversion de puissance est composé de quatre onduleurs 18 de puissance respectivement reliés aux quatre moteurs-roues 17. Chacun des onduleurs 18 de puissance a une entrée branchée au bus d'alimentation de puissance 12, une entrée branchée au contrôleur 15A correspondant, et une sortie branchée au moteur-roue 17 correspondant. Les contrôleurs 15A ont des entrées branchées respectivement aux moteurs-roues 17 pour superviser leur opération. En opération, chaque moteur-roue peut être ainsi contrôle et commandé indépendamment par le contrôleur 15A correspondant.

Le système de traction comprend de plus un écrêteur de tension 24 ayant une entrée branchée au bus d'alimentation de puissance 12, et une charge résistive 26 branchée à une sortie de l'écrêteur de tension 24 pour que, en opération, les pointes d'énergie présentes sur le bus d'alimentation de puissance 12 soient dissipées dans la charge résistive 26. Le système de traction comprend aussi un second convertisseur de puissance 28 ayant une entrée branchée au bus d'alimentation de puissance 12, et un accumulateur de puissance 30 branché à une sortie du second convertisseur de puissance 28 pour que, en opération, les pointes d'énergie présentes sur le bus d'alimentation de puissance soient accumulées dans l'accumulateur de puissance 30.

Le système de traction comprend aussi un régulateur de tension continue abaisseur/survolteur 32 ayant une première entrée/sortie branchée au bus d'alimentation de puissance 12, et une seconde entrée/sortie branchée à la sortie de puissance du connecteur de batterie 13. Le régulateur 32 est aussi branché au contrôleur 15C pour que, an opération, le contrôleur 15C supervise son statut et commande son fonctionnement. De plus, il est prévu un commutateur de puissance 34 branché entre l'entrée et la sortie du régulateur 32 et commandé par le contrôleur 16 pour que, en opération, le régulateur 32 puisse être courtcircuité au moyen du commutateur de puissance 34.

Le système de traction comprend aussi un chargeur de batterie 36 ayant une entrée pour recevoir une alimentation an courant alternatif ou une alimentation an courant continu, et une sortie branchée à la sortie de puissance du connecteur de batterie 13. Le chargeur est aussi branché au contrôleur 15E pour que le contrôleur 15E supervise son statut et commande son fonctionnement.

La génératrice 20 est une génératrice entraînée par un moteur à combustion interne fonctionnant préférablement de façon continue à vitesse constante. L'évaluation de puissance de la génératrice 20 est déterminée par la puissance nécessaire pour faire fonctionner le véhicule à une vitesse de croisière sur une autoroute. L'accumulateur de puissance 30 peut être un condensateur ou un circuit à effet de volant d'inertie.

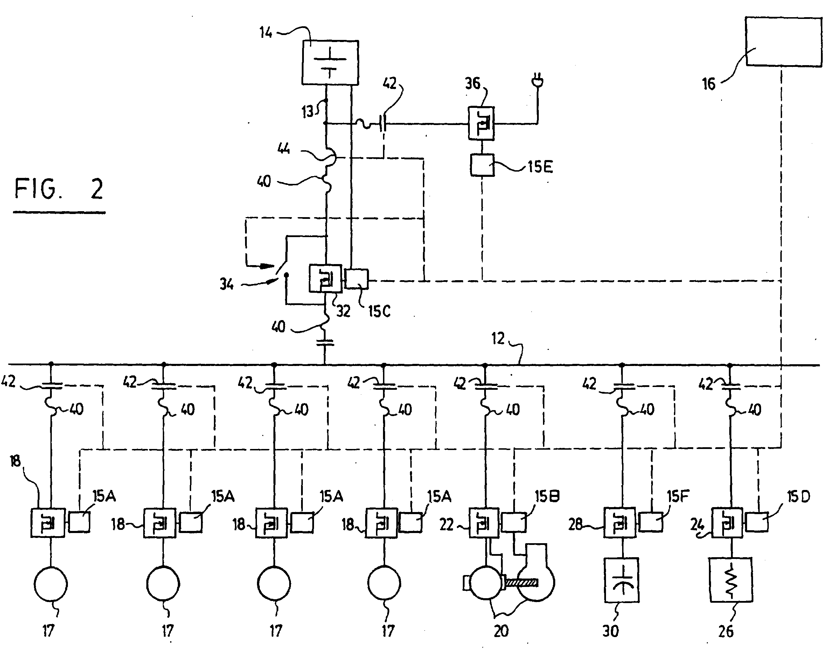

Si on se réfère maintenant à la figure 2, on peut y voir les éléments de la figure 1 avec des détails additionnels. Les numéros de référence utilisés dans la figure 1 sont aussi utilisés dans la figure 2 pour indiquer les éléments similaires. Le mode de réalisation montré à la figure 2 est en outre muni de fusibles 40 et de relais 42 et 44 pour protéger les éléments du système lorsqu'ils ne fonctionnent pas correctement. Le relais 44 est un relais de puissance.

En opération, le présent système de traction fournit une puissance primaire aux moteurs-roues 17 par la batterie 14; détecte le moment où une puissance auxiliaire est nécessaire pour alimenter les moteurs-roues au moyen du système de contrôle 15A, 15B, 15C, 15D, 15E, 15F et 16; et fournit la puissance auxiliaire aux moteurs-roues 17 par la génératrice 20.

Les modes d'opération de la génératrice 20 sont contrôlés en commandés en fonction de l'état de la batterie 14.

Le mode de réalisation montré aux figures 1 et 2 décrit un véhicule électrique hybride série. Ce véhicule hybride est basé sur l'utilisation d'une batterie 14 suffisamment puissante pour donner au véhicule une bonne performance sur une distance acceptable lorsqu'il fonctionne en mode exclusivement électrique. La batterie de puissance 14 est relativement petite en comparaison des batteries conventionnelles pour véhicules électriques et alimente quatre moteurs-roues 17. Cela réduit le poids et l'encombrement du véhicule. La génératrice 20 et le premier convertisseur de puissance 22 alimentent en puissance les moteurs-roues 17 et la batterie 14. Le régulateur abaisseur/survolteur bi-directionnel 32 placé entre la batterie 14 et les moteurs-roues 17 optimise la puissance tirée de la batterie 14 et fournit la tension électrique désirée indépendamment de la fonction courant/tension de la batterie 14. Le régulateur 32 optimise la tension d'alimentation des moteurs-roues 17 dans le but de minimiser les pertes tout en optimisant l'utilisation du câblage et des onduleurs 18 des moteurs-roues. À basse vitesse, un commutateur 34 est utilisé pour éliminer l'usage du régulateur 32 et pour réduire les pertes.

Lors d'un freinage régénérateur, le réculateur 32 ajuste le taux de chargement de la batterie. En cas de panne du système électrique, il peut isoler la batterie 14 du reste du circuit. Un écréteur de tension 24 branché à une résistance 26 limite la tension à une valeur prédéterminée en dissipant la puissance excédentaire dans la résistance 25. Le second convercisseur de puissance 28 branché à un condensateur 30 emmagasine la puissance excédentaire et la réutilise lorsque nécessaire. Le chargeur de batterie 36 monté à bord du véhicule a un facteur de puissance unitaire et recharge la batterie 14 à partir du réseau. Le système de contrôle est composé d'un contrôleur primaire 16 communiquant avec les contrôleurs auxiliaires 15A, 15B, 15C, 15D, 15E et 15F reliés aux composantes du système de traction. Le contrôleur primaire 16 contrôle et commande le flux d'énergie entre la batterie 14, la génératrice 20, les moteurs-roues 17, l'écrêteur de tension 24 et le condensateur 30 en utilisant, lorsque c'est requis, le régulateur de tension 32 dans le but d'optimiser la rendement. De plus, le contrôleur primaire 16 coordonne le fonctionnement des moteurs-roues 17 en fonction des signaux reçus au système de freinage à pédale 10, de l'accélérateur à pédale 6, du sélecteur de mode d'opération du véhicule 8 et du volant de direction 9 pour produire différentes fonctions du véhicule telles le freinage régénérateur, lé freinage anti-blocage, la traction intégrale, le blocage recul et l'effet différentiel.

Bien que la présente invention ait été précédemment décrite et illustrée dans les dessins annexés, plusieurs changements et modifications peuvent y être effectués par une personne de l'art sans sortir de son cadre.

## Revendications

1. Système de traction pour un véhicule muni d'un système (4) de démarrage, d'un accélérateur (6), d'un sélecteur (8) de mode d'opération et d'une batterie (14), comprenant:
- un système moteur (2) électrique;
- un système de conversion de puissance électrique branché au système moteur (2);
- un connecteur (13) de batterie (14) pour effectuer le branchement de cette batterie (14) afin d'alimenter le système moteur (2) via le système de conversion de puissance électrique;
- une génératrice (20), entraînée par un moteur à combustion, pour alimenter le système moteur (2) via le système de conversion de puissance électrique et pour recharger la batterie (14);
- un système (16, 15A, 15B, 15C, 15D, 15E, 15F) de contrôle branché au système (4) de démarrage, au sélecteur (8) de mode d'opération, à la batterie (14) et à la génératrice (20) pour surveiller leur statut et activer ou désactiver la génératrice (20) en fonction de l'état de la batterie (14), et
- un bus (12) d'alimentation de puissance à courant continu;
ledit système de traction étant caractérisé en ce que,
- le bus (12) d'alimentation de puissance à courant continu connecte directement en parallèle le système moteur (2) via le système de conversion de puissance électrique, la batterie (14) via un régulateur (32) de tension abaisseur/survolteur bidirectionnel branché au connecteur (13)de batterie (14), et la génératrice (20) via un premier convertisseur (22) de puissance électrique;
- le système moteur (2)comprend au moins deux moteurs-roues (17) électriques commandés séparément et qui constituent deux roues du véhicule;
- le système de conversion de puissance électrique comprend au moins deux onduleurs (18) de puissance;
- ledit système (16, 15A, 15B, 15C, 15D, 15E, 15F) de contrôle est branché en outre à l'accélérateur (6), aux onduleurs (18) de puissance, aux moteurs-roues (17) via les onduleurs (18) de puissance, au régulateur (32) de tension et au premier convertisseur (22) de puissance pour superviser leur statut et commander en outre les onduleurs (18) de puissance, les moteurs-roues (17) électriques via les onduleurs (18) de puissance, le régulateur (32) de tension, la génératrice (20) lorsqu'elle est activée, et le premier convertisseur (22) de puissance.

2. Système de traction selon la revendication 1, caractérisé en ce que le système (16, 15A, 15B, 15C, 15D, 15E, 15F) de contrôle est branché à un système (10) de freinage à pédale du véhicule pour superviser le statut dudit système (10) de freinage.

3. Système de traction selon la revendication 2, caractérisé en ce qu'il comprend en outre:
- un écréteur (24) de tension ayant une entrée branchée au bus (12) d'alimentation de puissance à courant continu et,
- une charge (26) résistive branchée à une sortie dudit écrêteur (24) de tension et destinée à dissiper des pointes d'énergie présentes sur le bus (12) d'alimentation de puissance à courant continu.

4. Système de traction selon la revendication 2, caractérisé en ce qu'il comprend en outre:
- un second convertisseur (28) de puissance ayant une entrée branchée audit bus (12) d'alimentation de puissance à courant continu et,
- un accumulateur (30) de puissance branché à une sortie du second convertisseur (28) de puissance et destiné à accumuler des pointes d'énergie présentes sur le bus (12) d'alimentation de puissance à courant continu.

5. Système de traction selon la revendication 1, caractérisé en ce qu'il comprend en outre un commutateur (34) de puissance, contrôlé par ledit système (16, 15A, 15B, 15C, 15D, 15E, 15F) de contrôle et branché entre l'entrée et la sortie dudit régulateur (32) de tension, ledit commutateur (34) étant destiné à court-circuiter le régulateur (32) de tension.

6. Système de traction selon la revendication 1, caractérisé en ce qu'il comprend en outre un chargeur (36) de la batterie (14), ledit chargeur (36) ayant une entrée apte à recevoir une alimentation en courant alternatif et une sortie branchée au connecteur (13) de batterie (14), ledit chargeur (36) étant également branché audit système (16, 15A, 15B, 15C, 15D, 15E, 15F) de contrôle pour que son statut soit supervisé et son opération contrôlée par ledit système (16, 15A, 15B, 15C, 15D, 15E, 15F) de contrôle.

7. Système de traction selon la revendication 1, caractérisé en ce que la génératrice (20) est entraînée par un moteur à combustion interne fonctionnant de façon continue à vitesse constante lorsqu'elle est activée.

8. Système de traction selon le revendication 4, caractérisé en ce que l'accumulateur (30) de puissance est un condensateur.

9. Système de traction selon le revendication 4, caractérisé en ce que l'accumulateur (30) de puissance est un circuit à effet de volant d'inertie.

10. Système de traction selon la revendication 1, caractérisé en ce que le système (16, 15A, 15B, 15C, 15D, 15E, 15F) de contrôle est branché à un volant (9) de direction du véhicule pour superviser le statut de ce volant (9).

11. Système de traction selon la revendication 1, caractérisé en ce que la batterie (14) est suffisamment puissante pour donner au véhicule une performance adéquate sur une distance acceptable en mode exclusivement électrique.

12. Méthode de contrôle du système de traction selon la revendication 1, comprenant les étapes suivantes:
(a) surveiller, par le système (16, 15A, 15B, 15C, 15D, 15E, 15F) de contrôle, l'état du système (14) de démarrage, du sélecteur (18) de mode d'opération, de la génératrice (20) entraînée par un mateur à combustion et de la batterie (14);
(b) alimenter le système moteur (2) électrique par la batterie via le bus (12) d'alimentation de puissance à courant continu et le système de conversion de puissance électrique;
(c) alimenter le système moteur (2) électrique par la génératrice (20)via le bus (12) d'alimentation de puissance à courant continu en fonction de l'état de la batterie (14) déterminé à l'étape (a); et,
(d) recharger la batterie (14) par la génératrice (20) via le bus (12) d'alimentation de puissance à courant continu;
la méthode étant caractérisée en ce que:
- dans les étapes (b),(c) et (d), le bus (12) d'alimentation de puissance à courant continu connecte directement en parallèle le système moteur (2) via le système de conversion de puissance électrique, la batterie (14) via le régulateur (32) de tension abaisseur/survolteur bidirectionnel branché au connecteur (13) de batterie (14), et la génératrice (20) via le premier convertisseur (22) de puissance électrique;
- dans les étapes (b) et (c) le système moteur (2) comprend au moins deux moteurs-roues (17) électriques commandés séparément et qui constituent deux roues du véhicule et le système de conversion de puissance électrique comprend au moins deux onduleurs (18) de puissance;
- l'étape (a) comprend en outre l'étape de superviser, par le système (16, 15A, 15B, 15C, 15D, 15E, 15F) de contrôle, le statut de l'accélérateur (6), des onduleurs (18) de puissance, des moteurs-roues (17) via les onduleurs (18) de puissance, du régulateur (32) de tension et du premier convertisseur (22) de puissance;
la méthode comprenant en outre,
- l'étape (e), pour commander, en fonction de la supervision effectuée à l'étape (a), les onduleurs (18) de puissance, les moteurs-roues (17) électriques via les onduleurs (18) de puissance, le régulateur (32) de tension, la génératrice (20) lorsqu'elle est activée, et le premier convertisseur (22) de puissance et contrôler le flux d'énergie circulant sur le bus (12) d'alimentation de puissance à courant continu entre la batterie (14), la génératrice (20) lorsqu'elle est activée, et les moteurs-roues (17) électriques.

13. Méthode selon la revendication 12, caractérisée an ce que l'étape (a) comprend en outre l'étape de surveiller l'état d'un système (10) de freinage du véhicule.

14. Méthode selon la revendication 13, caractérisée an ce que l'étape (e) comprend en outre l'étape de commander un écrêteur (24) de tension branché à une résistance (26) pour limiter la tension sur le bus (12) d'alimentation de puissance à courant continu à une valeur prédéterminée en dissipant une puissance excédentaire dans ladite résistance (26).

15. Méthode selon la revendication 13, caractérisée an ce que l'étape (e) comprend en outre l'étape de commander par un second convertisseur (28) de puissance branché à un accumulateur (30) de puissance pour emmagasiner une puissance excédentaire présente sur le bus (12) d'alimentation de puissance à courant continu et l'utiliser lorsque c'est nécessaire.

16. Méthode selon la revendication 12, caractérisée en ce qu'elle comprend en outre les étapes suivantes:
(i) détecter un état de déplacement du véhicule à basse vitesse au moyen du système (16, 15A, 15B, 15C, 15D, 15E, 15F) de contrôle et,
(ii) court-circuiter le régulateur (32) au moyen d'un commutateur (34) de puissance branché entre l'entrée et la sortie dudit régulateur (32) lorsque cet état est détecté.

## Claims

1. A drive system for a motor vehicle provided with a start key system (4), an accelerator (6), an operation mode selector (8) and a battery (14), comprising:
- an electric motor system (2);
- an electric power converter system connected to the motor system (2);
- a battery connector (13) for connecting said battery (14) in order to supply the motor system (2) via the electric power converter system;
- a generator (20), driven by a combustion motor, for supplying the motor system (2) via the electric power converter system and for recharging the battery (14);
- a controller system (16, 15A, 15B, 15C, 15D, 15E, 15F) connected to the start key system (4), the operation mode selector (8), the battery (14) and the generator (20) for monitoring their status and activating or deactivating the generator (20) depending on the status of the battery (14); and
- a DC power supply bus (12);
said drive system being characterized in that,
- the DC power supply bus (12) directly connects in parallel the motor system (2) via the electric power converter system, the battery (14) via a bi-directional step down/step up voltage regulator (32) connected to the battery connector (13), and the generator (20) via a first electric power converter (22);
- the motor system (2) comprises at least two electric motor wheels (17) controlled separately and which constitute two wheels of the vehicle;
- the electric power converter system comprises at least two power inverters (18); and
- said controller system (16, 15A, 15B, 15C, 15D, 15E, 15F) is further connected to the accelerator (6), the power inverters (18), the motor wheels (17) via the power inverters (18), the voltage regulator (32) and the first power converter (22) for monitoring their status and further controlling the power inverters (18), the electric motor wheels (17) via the power inverters (18), the voltage regulator (32), the generator (20) when it is activated, and the first power converter (22).

2. A drive system according to claim 1, characterized in that the controller system (16, 15A, 15B, 15C, 15D, 15E, 15F) is connected to a brake pedal system (10) of the vehicle for monitoring the status of said brake system (10).

3. A drive system according to claim 2, characterized in that it further comprises:
- a voltage clamp (24) having an input connected to the DC power supply bus (12), and
- a resistive load (26) connected to an output of said voltage clamp (24) so that energy peaks present in said DC power supply bus (12) can be dissipated in said resistive load (26).

4. A drive system according to claim 2, characterized in that it further comprises:
- a second power converter (28) having an input connected to said DC power supply bus (12), and
- a power storage device (30) connected to an output of said second converter (28) so that energy peaks present in said DC power supply bus (12) can be stored in said storage device (30).

5. A drive system according to claim 1, characterized in that it further comprises a power switch connection (34) controlled by said controller system (16, 15A, 15B, 15C, 15D, 15E, 15F) and connected between the input and the output of said voltage regulator (32), said switch connection (34) being devised for short-circuiting the voltage regulator (32).

6. A drive system according to claim 1, characterized in that it further comprises a battery charger (36), said charger (36) having an input for receiving an AC supply and an output connected to the battery connector (13), said charger (36) being also connected to said controller system (16, 15A, 15B, 15C, 15D, 15E, 15F) so that said controller system (16, 15A, 15B, 15C, 15D, 15E, 15F) can monitor a status thereof and control an operation thereof.

7. A drive system according to claim 1, characterized in that the generator (20) is driven by an internal combustion motor which continually runs at constant speed when said generator (20) is activated.

8. A drive system according to claim 4, characterized in that the storage device (30) is a capacitor.

9. A drive system according to claim 4, characterized in that the storage device (30) is a flywheel circuit.

10. A drive system according to claim 1, characterized in that the controller system (16, 15A, 15B, 15C, 15D, 15E, 15F) is connected to a steering wheel (9) of the vehicle for monitoring the status of said wheel (9).

11. A drive system according to claim 1, characterized in that the battery (14) is sufficiently powerful for providing to the vehicle an adequate performance over an acceptable distance when exclusively in an electric mode.

12. A method of operating the drive system of claim 1, comprising the following steps:
(a) monitoring, by the controller system (16, 15A, 15B, 15C, 15D, 15E, 15F), the status of the start key system (4), the operation mode selector (18), the generator (20) driven by a combustion motor, and the battery (14);
(b) supplying power to the electric motor system (2) from the battery via the DC power supply bus (12) and the electric power converter system;
(c) supplying power to the electric motor system (2) from the generator (20) via the DC power supply bus (12) depending on the status of the battery (14) determined in step (a); and
(d) recharging the battery (14) by the generator (20) via the DC power supply bus (12);
the method being characterized in that:
- in steps (b), (c) and (d), the DC power supply bus (12) directly connects in parallel the motor system (2) via the electric power converter system, the battery (14) via the bi-directional step down/step up voltage regulator (32) connected to the battery connector (13), and the generator (20) via the first electric power converter (22);
- in steps (b) and (c), the motor system (2) comprises at least two electric motor wheels (17) controlled separately and which constitute two wheels of the vehicle and the electric power converter system comprises at least two power inverters (18);
- step (a) further comprises the step of monitoring, by the controller system (16, 15A, 15B, 15C, 15C, 15E, 15F), the status of the accelerator (6), the power inverters (18), the motor wheels (17) via the power inverters (18), the voltage regulator (32) and the first power converter (22);
the method further comprising:
- step (e), for controlling, depending on the monitoring carried out in step (a), the power inverters (18), the electric motor wheels (17) via the power inverters (18), the voltage regulator (32), the generator (20) when it is activated, and the first power converter (22) and controlling the energy flux flowing in the DC power supply bus (12) between the battery (14), the generator (20) when it is activated, and the electric motor wheels (17).

13. Method according to claim 12, characterized in that step (a) further comprises the step of monitoring the status of a brake system (10) of the vehicle.

14. Method according to claim 13, characterized in that step (e) further comprises the step of controlling a voltage clamp (24) connected to a resistor (26) for limiting the voltage on the DC power supply bus (12) to a predetermined value by dissipating an excess power in said resistor (26).

15. Method according to claim 13, characterized in that step (e) further comprises the step of controlling by a second power converter (28) connected to a power storage device (30) for storing an excess power present on the DC power supply bus (12) and using it when it is necessary.

16. Method according to claim 12, characterized in that it further comprises the following steps:
(i) detecting a displacement status of the vehicle at low speed by means of the controller system (16, 15A, 15B, 15C, 15D, 15E, 15F), and
(ii) short-circuiting the regulator (32) by means of a power switch connection (34) connected between the input and the output of said regulator (32) when this status is detected.

## Patentansprüche

1. Antriebssystem für ein Fahrzeug, das mit einem Anlassersystem (4), einem Fahrpedal (6), einer Betriebsart-Wähleinrichtung (8) und einer Batterie (14) versehen ist, umfassend:
- ein Elektromotorsystem (2);
- ein System zum Umsetzen elektrischer Leistung, das an das Motorsystem (2) angeschlossen ist;
- einen Verbinder (13) der Batterie (14) zum Herstellen des Anschlusses dieser Batterie (14), um das Motorsystem (2) über das System zum Umsetzen elektrischer Leistung zu versorgen;
- einen Generator (20), der von einer Brennkraftmaschine angetrieben wird, uni das Motorsystem (2) über das System zum Umsetzen elektrischer Leistung zu versorgen und um die Batterie (14) wiederaufzuladen;
- ein Steuersystem (16, 15A, 15B, 15C, 15D, 15E, 15F), das an das Anlassersystem (4), die Betriebsart-Wähleinrichtung (8), die Batterie (14) und den Generator (20) angeschlossen ist, um deren Zustand zu überwachen und den Generator (20) in Abhängigkeit vom Zustand der Batterie (14) zu aktivieren oder zu deaktivieren, und
- einen Bus (12) für die Versorgung mit Gleichstromleistung;
wobei das Antriebssystem dadurch gekennzeichnet ist, daß
- der Bus (12) für die Versorgung mit Gleichstromleistung das Motorsystem (2) über das System zum Umsetzen elektrischer Leistung, die Batterie (14) über einen an den Verbinder (13) der Batterie (14) bidirektional angeschlossenen Abwärtstransformations-/Aufwärtstransformations-Spannungsregler (32) und den Generator (20) über einen ersten Umsetzer (22) für elektrische Leistung direkt parallelschaltet;
- das Motorsystem (2) wenigstens zwei Läufer-Elektromotoren (17) umfaßt, die getrennt gesteuert werden und zwei Räder des Fahrzeugs bilden;
- das System zum Umsetzen elektrischer Leistung wenigstens zwei Leistungs-Wechselrichter (18) umfaßt;
- das Steuersystem (16, 15A, 15B, 15C, 15D, 15E, 15F) außerdem an das Fahrpedal (6), die Leistungs-Wechselrichter (18), die Läufermotoren (17) über die Leistungs-Wechselrichter (18), den Spannungsregler (32) und den ersten Leistungsumsetzer (22) angeschlossen ist, um ihren Zustand zu überwachen und um außerdem die Leistungs-Wechselrichter (18), die Läufer-Elektromotoren (17) über die Leistungs-Wechselrichter (18), den Spannungsregler (32), den Generator (20), sofern er aktiviert, und den ersten Leistungs-Umsetzer (22) zu überwachen.

2. Antriebssystem nach Anspruch 1, dadurch gekennzeichnet, daß das Steuersystem (16, 15A, 15B, 15C, 15D, 15E, 15F) an ein Pedal-Bremssystem (10) des Fahrzeugs angeschlossen ist, um den Zustand des Bremssystems (10) zu überwachen.

3. Antriebssystem nach Anspruch 2, dadurch gekennzeichnet, daß es außerdem umfaßt:
- einen Spannungsbegrenzer (24), der einen Eingang besitzt, der an den Bus (12) für die Versorgung mit Gleichstromleistung angeschlossen ist, und
- eine ohmsche Last (26), die an einen Ausgang des Spannungsbegrenzers (24) angeschlossen ist und dazu bestimmt ist, Energiespitzen, die auf dem Bus (12) für die Versorgung mit Gleichstromleistung vorhanden sind, in Wärme umzuwandeln.

4. Antriebssystem nach Anspruch 2, dadurch gekennzeichnet, daß es außerdem umfaßt:
- einen zweiten Leistungsumsetzer (28), der einen Eingang besitzt, der an den Bus (12) für die Versorgung mit Gleichstromleistung angeschlossen ist, und
- einen Leistungsakkumulator (30), der an einen Ausgang des zweiten Leistungsumsetzers (28) angeschlossen ist und dazu bestimmt ist, Energiespitzen zu akkumulieren, die auf dem Bus (12) für die Versorgung mit Gleichstromleistung vorhanden sind.

5. Antriebssystem nach Anspruch 1, dadurch gekennzeichnet, daß es außerdem einen Leistungsumschalter (34) umfaßt, der vom Steuersystem (16, 15A, 15B, 15C, 15D, 15E, 15F) gesteuert wird und zwischen den Eingang und den Ausgang des Spannungsreglers (32) geschaltet ist, wobei der Umschalter (34) dazu bestimmt ist, den Spannungsregler (32) kurzzuschließen.

6. Antriebssystem nach Anspruch 1, dadurch gekennzeichnet, daß es außerdem eine Ladevorrichtung (36) für die Batterie (14) umfaßt, wobei die Ladevorrichtung (36) einen Eingang, der eine Wechselstromversorgung empfangen kann, und einen Ausgang, der an den Verbinder (13) der Batterie (14) angeschlossen ist, besitzt, wobei die Ladevorrichtung (36) außerdem an das Steuersystem (16, 15A, 15B, 15C, 15D, 15E, 15F) angeschlossen ist, damit durch das Steuersystem (16, 15A, 15B, 15C, 15D, 15E, 15F) ihr Zustand überwacht und ihr Betrieb gesteuert wird.

7. Antriebssystem nach Anspruch 1, dadurch gekennzeichnet, daß der Generator (20) durch eine Brennkraftmaschine angetrieben wird, die ununterbrochen mit konstanter Geschwindigkeit arbeitet, wenn sie aktiviert ist.

8. Antriebssystem nach Anspruch 4, dadurch gekennzeichnet, daß der Leistungsakkumulator (30) ein Kondensator ist.

9. Antriebssystem nach Anspruch 4, dadurch gekennzeichnet, daß der Leistungsakkumulator (30) eine Schaltung mit Schwungradeffekt ist.

10. Antriebssystem nach Anspruch 1, dadurch gekennzeichnet, daß das Steuersystem (16, 15A, 15B, 15C, 15D, 15E, 15F) an ein Lenkrad (9) des Fahrzeugs angeschlossen ist, um den Zustand dieses Lenkrades (9) zu überwachen.

11. Antriebssystem nach Anspruch 1, dadurch gekennzeichnet, daß die Batterie (14) ausreichend leistungsfähig ist, um dem Fahrzeug in ausschließlich elektrischem Betrieb über eine annehmbare Entfernung eine angemessene Leistung zu verleihen.

12. Steuerverfahren für das Antriebssystem nach Anspruch 1, das die folgenden Schritte umfaßt:
(a) Überwachung des Zustands des Anlassersystems (14), der Betriebsart-Wähleinrichtung (18) des durch eine Brennkraftmaschine angetriebenen Generators (20) und der Batterie (14) durch das Steuersystem (16, 15A, 15B, 15C, 15D, 15E, 15F);
(b) Versorgen des Elektromotorsystems (2) durch die Batterie (14) über den Bus (12) für die Versorgung mit Gleichstromleistung und das System zum Umsetzen elektrischer Leistung;
(c) Versorgen des Elektromotorsystems (2) durch den Generator (20) über den Bus (12) für die Versorgung mit Gleichstromleistung in Abhängigkeit von dem im Schritt (a) bestimmten Zustand der Batterie (14); und
(d) Wiederaufladen der Batterie (14) durch den Generator (20) über den Bus (14) für die Versorgung mit Gleichstromleistung;
wobei das Verfahren dadurch gekennzeichnet ist, daß:
- in den Schritten (b), (c) und (d) der Bus (12) für die Versorgung mit Gleichstromleistung das Motorsystem (2) über das System zum Umsetzen elektrischer Leistung, die Batterie (14) über den an den Verbinder (13) der Batterie bidirektional angeschlossenen Abwärtstransformations-/Aufwärtstransformations-Spannungsregler (32) und den Generator (20) über den ersten Umsetzer (22) für elektrische Leistung direkt parallelschaltet;
- in den Schritten (b) und (c) das Motorsystem (2) wenigstens zwei Läufer-Elektromotoren (17) umfaßt, die getrennt gesteuert werden und zwei Räder des Fahrzeugs bilden, und das System zum Umsetzen elektrischer Leistung wenigstens zwei Leistungs-Wechselrichter (18) umfaßt;
der Schritt (a) außerdem den Schritt des Überwachens des Zustandes des Fahrpedals (6), der Leistungs-Wechselrichter (18), der Nabenmotoren (17) über die Leistungswechselrichter (18), des Spannungsreglers (32) und des ersten Leistungsumsetzers (22) durch das Steuersystem (16, 15A, 15B, 15C, 15D, 15E, 15F) umfaßt;
wobei das Verfahren außerdem umfaßt:
- den Schritt (e), in dem die Leistungswechselrichter (18), die Läufer-Elektromotoren (17) über die Leistungswechselrichter (18), der Spannungsregler (32), der Generator (20), sofern er aktiviert ist, und der erste Leistungsumsetzer (22) in Abhängigkeit von der im Schritt (a) ausgeführten Überwachung gesteuert werden und der Fluß der Energie gesteuert wird, die auf dem Bus (12) für die Versorgung mit Gleichstromleistung zwischen der Batterie ()14), dem Generator (20), sofern er aktiviert ist, und den Läufer-Elektromotoren (17) zirkuliert.

13. Verfahren nach Anspruch 12, dadurch gekennzeichnet, daß der Schritt (a) außerdem den Schritt des Überwachens des Zustandes eines Fahrzeug-Bremssystems (10).

14. Verfahren nach Anspruch 13, dadurch gekennzeichnet, daß der Schritt (e) außerdem den Schritt des Steuerns eines Spannungsbegrenzers (24) umfaßt, der an einen Widerstand (26) angeschlossen ist, um die Spannung auf dem Bus (12) für die Versorgung mit Gleichstromleistung auf einen vorgegebenen Wert zu begrenzen, indem er eine überschüssige Leistung im Widerstand (26) in Wärme umwandelt.

15. Verfahren nach Anspruch 13, dadurch gekennzeichnet, daß der Schritt (e) außerdem den Schritt des Steuerns mittels eines zweiten Leistungsumsetzers (28) umfaßt, der an einen Leistungsakkumulator (30) angeschlossen ist, um eine auf dem Bus (12) für die Versorgung mit Gleichstromleistung vorhandene überschüssige Leistung zu speichern und sie zu verwenden, wenn dies notwendig ist.

16. Verfahren nach Anspruch 12, dadurch gekennzeichnet, daß es außerdem die folgenden Schritte umfaßt:
(i) Erfassen eines Bewegungszustandes des Fahrzeugs mit niedriger Geschwindigkeit mittels des Steuersystems (16, 15A, 15B, 15C, 15D, 15E, 15F) und
(ii) Kurzschließen des Reglers (32) mittels eines Leistungsumschalters (34), der zwischen den Eingang und den Ausgang des Reglers (32) geschaltet ist, wenn dieser Zustand erfaßt wird.
